# EUROPEAN PATENT APPLICATION

(11) **EP 2 015 535 A1**
(43) Date of publication of application: **14.01.2009**
(21) Application number: 07013497.8
(22) Date of filing: 10.07.2007
(51) Int. Cl.: H04L 29/06

(54) **Detection of mobility functions implemented in a mobile node**

(71) Applicant: Panasonic Corporation, Kadoma-shi Osaka 571-8501 (JP)
(72) Inventor: Velev, Genadi, 63225 Langen (DE); Weniger, Kilian, Dr., 63225 Langen (DE)
(74) Representative: Grünecker, Kinkeldey, Stockmair & Schwanhäusser Anwaltssozietät

(57) **Abstract**

The invention relates to a method for configuring an IP address of a mobile node attaching to a first access network during an inter-access technology handover from another, second access network. Moreover, the invention relates to a mobile access gateway and a mobile node that participate in this method. First and second access network belong to a network domain offering a network-based mobility function. In order to detect whether a mobile node implements a network-based mobility function a virtual interface discovery is performed by checking whether the mobile node also configures the address according to the home network prefix offered to the mobile node before the handover on its interface to the first access network. In parallel, an address configuration is performed. Based on the detection of whether a virtual interface is implemented at the mobile node, the mobile access gateway may decide whether to use network-based mobility or client-based mobility and change the address configuration.

## Description

### FIELD OF THE INVENTION

The invention relates to a method for configuring an IP address of a mobile node upon the mobile node attaching to a first access network of a mobile communication system during a handover of the mobile terminal from another, second access network utilizing an access technology different to the access technology used in the first access network. Moreover, the invention relates to a mobile access gateway and a mobile node that participate in this method.

### TECHNICAL BACKGROUND

Communications systems evolve more and more towards an Internet Protocol (IP)-based network. They consist of many interconnected networks, in which speech and data is transmitted from one terminal to another terminal in pieces, so-called packets. Those packets are routed from the source to the destination by routers in a connection-less manner. IP packets consist of IP header and payload information, whereas the IP header comprises, among other things, source and destination IP address. For scalability reasons an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

If a terminal is mobile, from now on called mobile node (MN), and moves between subnets, it must change its IP address to a topological correct one because of the hierarchical addressing scheme of the Internet Protocol (IP). However, since connections on higher-layers such as TCP connections are defined with the IP addresses (and ports) of the communicating nodes, the connection breaks if one of the nodes changes its IP address, e.g., due to movement.

Mobile IPv6 (or MlPv6) as specified in D. Johnson, C. Perkins, J. Arkko, "Mobility Support in IPv6", RFC 3775, June 2004 (available at http://www.ietf.org and incorporated herein by reference) is an IP-based mobility protocol that enables mobile nodes to move between subnets in a manner transparent for higher layers and applications, i.e. without breaking higher-layer connections. Therefore, a mobile node has two IP addresses configured: a care-of-address (CoA) and a home address (HoA).

The mobile node's upper layers use the home address for communication with the communication partner (destination terminal), also referred to as a corresponding node (CN). This address does not change and serves the purpose of identification of the mobile node. Topologically, it belongs to the home network (HN) of the mobile node. In contrast, the care-of-address changes on every movement resulting in a subnet change and is used as the locator for the routing infrastructure. Topologically, it belongs to the network the mobile node is currently visiting. One out of a set of home agents (HAs) located on the home link maintains a mapping of the mobile node's care-of-address to mobile node's home address and redirects incoming traffic for the mobile node to its current location. Reasons for having a set of home agents instead of a single home agent are redundancy and load balancing.

Mobile IPv6 currently defines two modes of operation: bi-directional tunneling and route optimization. If bi-directional tunneling is used, data packets sent by the corresponding node and addressed to the home address of the mobile node are intercepted by the home agent in the home network and tunneled to care-of-address of the mobile node. Data packets sent by the mobile node are reverse-tunneled to the home agent, which decapsulates the packets and sends them to the corresponding node. For this operation, the home agent must be informed about the care-of-address of the mobile node. Therefore, the mobile node sends a registration message (a so called binding update - BU) messages to the home agent. These messages are sent over an IPsec security association and thus are authenticated and integrity protected. In order for the mobile node to have IPsec association with the home agent, the mobile node needs to perform bootstrapping a-priori. Bootstrapping is the process of obtaining at least the following information: a home address, a home agent address, and a security association with home agent. This information is needed before the mobile node registers a care-of-address with the home agent. The general process of bootstrapping is described in G. Giaretta et al., "Mobile lPv6 bootstrapping in split scenario", draft-ietf-mip6-bootstrapping-split-05, May 2007 (available at http://www.ietf.org and incorporated herein by reference). The process may last several seconds because several round-trip-times between mobile node and home agent are needed.

Mobile IP is categorized as host-based (or client-based) mobility management, since the mobility-related signaling is between the host (or client) and the home agent. Hence, MIPv6 is also referred to as Client Mobile IP (CMIP) due to its client-based mobility function.

Another approach targets the IP mobility management in limited geographical region is managed by the network and therefore is transparent to the mobile node. This approach is referred as network-based, localized IP mobility. One main characteristic of network-based mobility is that the access network entities are appropriately configured to detect the mobile node movement and to exchange information about the current location of the mobile node so that the mobile node does not need to be involved in mobility management. Therefore the mobility-related signaling over the wireless interface is avoided. Other advantages of the network-based mobility management may be a reduced packet overhead over the air, since no MIPv6 encapsulation is needed, and mobility support for simple IP nodes (i.e. non-MIP-capable nodes).

The Internet Engineering Task Force (IETF) organization is working on such approach for localized mobility management based on the Mobile IP protocol. Since a network entity is acting as a proxy on behalf of the mobile node, the protocol is called Proxy Mobile IP (PMIP). There is a variant for IPv6 called PMIPv6 (see S. Gundavelli et al., "Proxy Mobile IPv6", draft-ietf-netlmm-proxymip6-01.txt, April 2007 available at http://www.ietf.org and incorporated herein by reference) and a variant for IPv4 called PMIPv4 (K. Leung et al., "Mobility Management using Proxy Mobile IPv4", draft-leung-mip4-proxy-mode-02.txt, Jan 2007 available at http://www.ietf.org and incorporated herein by reference).

PMIPv6 introduces a new logical entity called mobile access gateway(MAG) which is colocated with the access router (AR). The mobile access gateway acts as a proxy for mobility management, meaning that it sends binding update messages on behalf of a mobile node. These binding update messages are marked with a flag so that they can be identified as proxy binding update (PBU) messages. Furthermore, proxy binding update messages contain a Network Access Identifier (NAI) option, a home prefix option, and a timestamp option. The NAI option contains the NAI (as specified in B. Aboba et al., "The Network Access Identifier", RFC 4282, December 2005 available at http://www.ietf.org and incorporated herein by reference) which has the form of "username@realm" and which is used to identify a mobile node.

The home network prefix option contains the home network prefix of the mobile node. In the so-called per-mobile node-prefix addressing model, every mobile node has a unique home network prefix and the mobile node's global IP address(es) is configured based on this prefix. The unique home network prefix option in the proxy binding update messages could be used to carry a PMIP home address. The timestamp option contains the time the proxy binding update has been sent by the mobile access gateway and is used by the home agent to identify the freshness of the proxy binding update messages. The sequence number value of the proxy binding update message is ignored by the home agent.

When a mobile node attaches to a new mobile access gateway, it authenticates with the network using the EAP framework (see B, Aboba et al., "Extensible Authentication Protocol (EAP)", RFC 3748, June 2004) and an EAP method such as EAP-AKA (see L-Zhu et al., "The Simple and Protected Generic Security Service Application Program Interface (GSS-API) Negotiation Mechanism", RFC 4187, October 2005). The mobile access gateway typically acts as pass-through authenticator and forwards the EAP packets to the AAA (Authentication, Authorization, and Accounting) server/infrastructure related to the mobile node. The mobile node uses a NAI as identifier.

If the network authentication is successful, the mobile access gateway obtains the mobile node's profile from the AAA server including the mobile node's home prefix. The mobile access gateway then sends a proxy binding update to the home agent and announces the home prefix to the mobile node. After the mobile node authenticates with the access router, it starts the IP configuration, i.e. it configures a link-local (link-local) IP address, performs Duplicate Address Detection (DAD) for the link-local address sending a Neighbor Solicitation (NS) message to the solicited-node multicast address of the link-local address to be checked. If the procedure is successful, the mobile node sends Router Solicitation (RS) message to all-routers multicast address and waits for receiving a Router Advertisement (RA). The access router/mobile access gateway responds with unicast router advertisement including the mobile node's home prefix.

A mobile node may apply either stateless or stateful address configuration schemes. The mobile node learns from the received router advertisement what address configuration scheme to use:
- If the "M" bit in the router advertisement is set to 1, the mobile node uses Dynamic Host Configuration Protocol (DHCP). The mobile node sends DHCP solicit message, which is captures by the access router/mobile access gateway acting as DHCP relay agent. The DHCP relay forwards this message to the DHCP server, which answers with DHCP reply or advertise message including a global IP address that is to be assigned to the mobile node. After the mobile node receives the DHCP advertise message, the mobile node configures the advertised address as its global IP address.
- If the "M" bit in the router advertisement is set to 0, the mobile node reads the prefix advertised in the router advertisement and configures a global IP address based on this prefix. Then the mobile node starts duplicate address detection sending a neighbor solicitation (NS) message to the solicited-node multicast address of the advertised prefix in order to verify if other nodes on the link have configured the same IP address. If the duplicate address detection procedure is successful, the mobile node may start using this IP address for communication with corresponding nodes. In case optimistic duplicate address detection is used, it may use the not yet validated IP address immediately for communication.

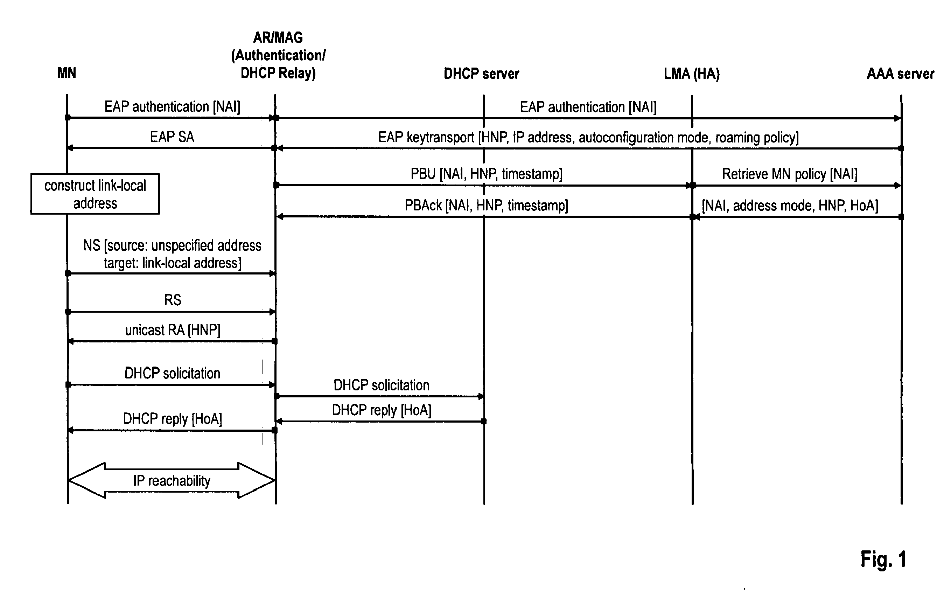

After configuring a global IP address, the mobile node is IP reachable and can use the IP address as long as it moves within the PMIP domain. An exemplary signaling flow for PMIPv6 during initial attachment procedure in case of DHCP address configuration as described above in this paragraph is shown in Fig. 1.

Duplicate address detection is a procedure performed by a node to determine that an address it wishes to use is not already in use by another node. Duplicate address detection is performed for all unicast address, independent whether they are assigned by stateless or stateful address configuration method. However, if the interface ID of the new address is the same than of an already tested and configured addresses, duplicate address detection may be skipped for this address. To check the uniqueness of an address, the node sends neighbor solicitation targeting the address. If there are any other nodes on the link having configured this address on their interfaces, they reply with neighbor advertisement (NA). In this way the requesting node learns if other nodes on the link already use the address. If a duplicate address is discovered during the procedure, the address cannot be assigned to the interface. A detailed description of the duplicate address detection is given in S. Thomson, T. Narten, "IPv6 Stateless Address Autoconfiguration", RFC 2462, December 1998 (available at http://www.ietf.org and incorporated herein by reference).

Since the procedure for duplicate address detection takes a considerable time because the NS may be re-transmitted up to 3 times, an optimization is specified in RFC 4429. This procedure is called "optimistic duplicate address detection" and the intention is to minimize address configuration delays in the successful case, and to remain interoperable with unmodified hosts and routers. Optimistic duplicate address detection specifies a new address state called "optimistic" that is used to mark an address that is available for use during the duplicate address detection procedure is not completed. After the duplicate address detection completes successfully, the address state is changed to preferred. An optimistic address may be used for communication.

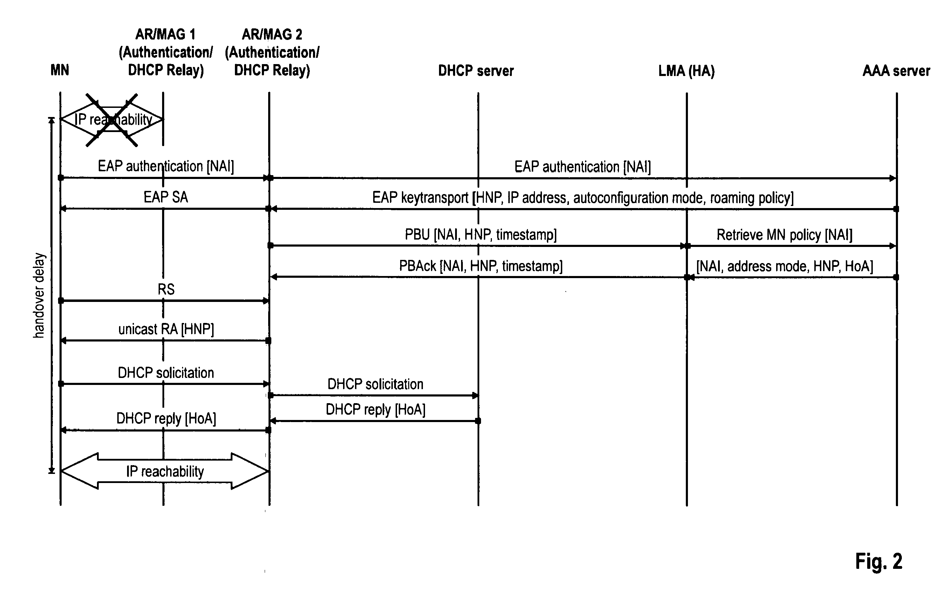

Fig. 2 shows the signaling flow in case of handover between mobile access gateways within the same PMIP domain. When the mobile node moves to the area of AR/MAG 2, it starts the authentication procedure as described with respect to Fig. 1. After the MAG 2 receives the EAP key transport message, it can start the registration process with home agent sending proxy binding update including NAI, home network prefix, and a timestamp.

MAG 2 may retrieve the home network prefix (HNP) in several ways. One possibility is (as shown in Fig. 2) that the mobile access gateway obtains the home network prefix from the AAA server or other policy store during the authentication process.

Alternatively (if mobile access gateway doesn't receive the home network prefix during the authentication process) the mobile access gateway could send a proxy binding update to the local mobility anchor having home network prefix set to 0. Than the local mobility anchor would announce the home network prefix in the proxy binding update acknowledgment (PBAck) to the mobile access gateway. After the mobile node has successfully-authenticated with MAG 2, it starts checking if the current lP configuration is still valid, i.e. mobile node sends a RS message. AR/MAG 2 responds with router advertisement having "M" flag set to 1 for using DHCP for address configuration. Following, the mobile node sends DHCP confirm message, which is intercepted by the AP/MAG 2 acting as DHCP relay entity. The DHCP reply message sent by the DHCP server confirms that the previously configured home address can still be used. After the DHCP procedure is completed, the mobile node is again IP connected and can send/receive data packets.

The functionality of a home agent as defined in RFC 3775 is re-used to a large extent, but some changes are necessary to support PMIPv6. Henceforth, a home agent as defined in RFC 3775 is called CMIP-home agent and a home agent as defined in PMIPv6 discussed above is called PMIP-home agent. A major difference between the two home agents is how the "freshness" of binding update/proxy binding update messages is determined by the home agent. A CMIP-home agent identifies the "freshness" of a binding update message based on the sequence number in the binding update, whereas a PMIP-home agent identifies the freshness of a proxy binding update messages based on the timestamp in the timestamp option in the proxy binding update. A PMIP-home agent ignores the sequence number value in proxy binding update messages. A scenario is assumed in this invention where the PMIP-home agent and a CMIP-home agent are co-located (in the followings the CMIP/PMIP-home agent is simply referred to as a home agent).

Advanced modern mobile nodes have the ability to communicate over several access technologies, which allows choosing the best and "cheapest" data path. For this purpose the mobile nodes possess several physical interfaces enabling the communication with different access technologies. If the mobile node performs a handover between access technologies and session continuity is required, the mobile node must implement one of the following:
- Client-based mobility (e.g. MIP): The mobile node configures a distinct care-of-address for each interface and depending on what interface is to be used, the mobile node's MIP function registers the corresponding care-of-address with the home agent. Further the MIP function encapsulates the data packets with the correct care-of-address for the transmission over the desired interface.
- Network-based mobility (e.g. PMIP) for inter-technology handover. The network-based mobility, as developed in IETF, is applicable for single interface only, i.e. for mobility within one access technology. However, some network operators may apply network-based mobility for inter-technology handover. In order to realize this, the mobile node needs to implement special function (called "virtual interface" as specified in 3GPP TSG SA Tdoc. S2H060457, "Response to NETLMM application for Inter Access System Mobility", by NTT DoCoMo, NEC, Fujitsu, April 2006 available at ftp://ftp.3gpp.org/tsg_sa/WG2_Arch/Ad-hoc_meetings/2006-04_SAE_Paris/Docs/ and incorporated herein by reference) that provides a virtual adaptor to mask changes in local interfaces from other host functions, i.e. how the terminal switches between different physical network interfaces. More details are given below.
- Support both schemes. The mobile node may implement both host-based mobility (MIP) and support for network-based mobility (virtual interface). In this case the mobile node chooses which scheme to use based on the service offered by the network. E.g. if the network advertises a different sub-network prefixes for the different access technologies, the mobile node would use MIP to maintain session continuity. Otherwise if the network advertises the same sub-network prefix, the mobile node would use the virtual interface.

For PMIP support in case of inter-technology handover a virtual interface function needs to be implemented in the mobile node. Normally the upper layer applications, e.g. TCP or UDP sessions, are bound to the interface through an IP address. This is for example also the case for MIP, where the transport sessions are bound to the static home address, whereas each physical interface of the mobile node is assigned and bound to a different care-of-address. The MIP implementation manages the scheduling of data packets between the care-of-addresses.

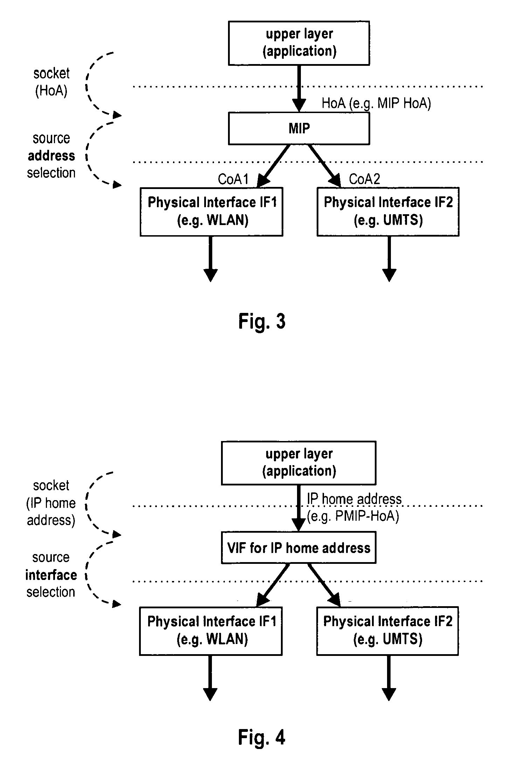

A logical structure of the MIP implementation can be seen on the Fig. 3. In contrary to host-based mobility, in the network-based mobility the same IP address is to be used for sending data over different interfaces. To enable such functionality, a virtual interface (VIF) is introduced to which the IP address is bound. The virtual interface decides which physical interface to use for sending data packets as shown in Fig. 4. Important to note is that for the IP layer and higher layers a single IP home address PMIP-HoA is used to communicate with different access networks via the virtual interface.

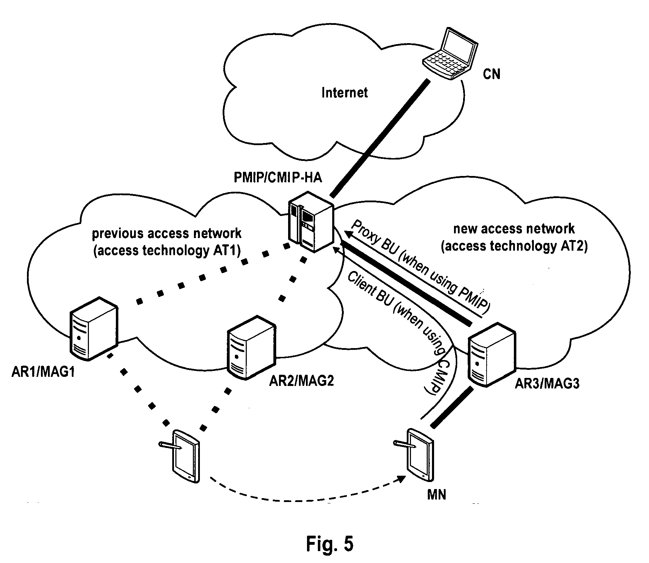

Fig. 5 illustrates a scenario where a mobile node hands over from one access technology (AT1) to another, second access technology (AT2). In Fig. 5 it is assumed that the access networks offering the two different access technologies belong to a single Proxy MIP domain, i.e. the mobile node MN may utilize a single IP address (PMIP-HoA) when moving in the Proxy MIP domain irrespective of the access network and access technology of the access networks belonging to the Proxy MIP domain. The router PMIP/CMIP-HA indicates a router that is providing both, a home agent function for providing client-based mobility by means of MIPv6 and a home agent function for providing network-based mobility by means of Proxy MIPv6. The PMIP/CMIP-HA entity may be the same entity as the LMA (HA) entity depicted in Fig. 1 and Fig. 2.

There are two possibilities to manage the session continuity. In the first scenario the MAG 3 has a security association with mobile node's local mobility anchor and can offer PMIP service to the mobile node, as the MAG 3 advertises the mobile node's home network prefix to the mobile node and sends proxy binding update for location update to the LMA. In the second scenario, the mobile node uses MIP, i.e. it configures a new care-of-address on the interface to AT2 and sends binding update to the home agent. Note that the LMA and the home agent functions may be located in the same entity. Here the MAG 3 advertises a topologically correct prefix, which differs from the home network prefix that has been assigned to the MN in the Proxy MIP domain. Since the network operator of AT2 has the ability to offer both services, MIP and PMIP, to the mobile node (by means of MAG3), the operator has to decide which service to offer. Usually the decision is taken based on the mobile node's capabilities stored in mobile node's profile in the network. MAG3 may obtain the mobile node's capabilities during the authentication process and to decide about the offered mobility service, which is identical to decide about which prefix to advertise to the mobile node.

However, it is possible that the network operator doesn't have information about the mobile node's capabilities, i.e. the network doesn't know whether the mobile node implements MIP or VIF functions. There are several reasons why the mobile node's capabilities are not known by the MAG 3. One reason might be that VIF/MIP is a third party software installed on the mobile node and therefore it is unknown to the mobile node's IP stack and operating system (OS) and hence the mobile node cannot communicate these capabilities to the network. Another reason might be that there is no standardized way to communicate the mobile node capabilities to the network. Standardization effort and alignment between vendors are needed in order to exchange of mobile node's capabilities between mobile node and network entities (Policy Store server or AAA server).

In scenario of inter-technology handover a network operator may be able to offer both network-based and host-based mobility service to a mobile node. In order to take the correct decision, the network operator should know the mobile node's capabilities to support session continuity at inter-technology handover, which means mobile node switches between physical interfaces. As described above, there are situation where the network operator doesn't have knowledge about the mobile node's capabilities. This means the network doesn't know whether the mobile node implements support for host-based or network-based mobility. In such cases the network may offer the wrong mobility service to the mobile node that leads to undesirable handover delay and packet losses.

### SUMMARY OF THE INVENTION

An object of the invention is to detect in the access network (of the operator) whether a mobile node implements a client-based mobility function or a network-based mobility function. A further object is design a handover mechanism for an inter-technology handover so that data flow interruption during inter-technology handover may be avoided.

The object is solved by the subject matter of the independent claims. Advantageous embodiments of the invention are subject matters of the dependent claims.

One main aspect of the invention is to recognize the implementation of a virtual interface at a mobile node that attaches to a new access network. The respective node in the access network, the mobile access gateway, responsible for detecting the mobile node's implemented mobility function(s) utilizes a virtual interface discovery procedure for this purpose. The virtual interface discovery may be performed in parallel to address configuration for the mobile node's interface to the new access network. In case the mobile access gateway detects the mobile terminal implementing a virtual interface, it concludes that the mobile terminal is capable of utilizing a network-based mobility function. Basically, the virtual interface discovery checks whether the mobile node configures the same global IP address on its interface to the new access network as the IP address that has been configured on the interface to the old access network according to the address prefix offered to the mobile node before the handover. Based on the detection of whether a virtual interface is implemented at the mobile node, the mobile access gateway may decide whether to use network-based mobility or client-based mobility and causes the mobile node to configure an address with the appropriate prefix to support the selected mobility function and - if necessary - to de-configure addresses that may have been configured according to other prefix(es).

One exemplary embodiment of the invention relates to a method for configuring an IP address of a mobile node upon the mobile node attaching to a first access network of a mobile communication system during a handover of the mobile terminal from another, second access network utilizing an access technology different to the access technology used in the first access network. The first and the second access network are part of a network domain offering a network-based mobility function. A virtual interface discovery is performed between a mobile access gateway and the mobile node to facilitate the detection of whether the mobile node utilizes a network-based mobility function.

Furthermore, a first address configuration procedure provides the mobile node with the IP address prefix of the first access network and the IP address prefix offered to the mobile node before the handover (which is the mobile node's home network prefix that has been assigned to the mobile node in the network domain offering the network based-mobility function) for enabling the mobile node to provisionally configure a respective IP address according to a respective one of the address prefixes for communication via the interface to the first access network is also preformed.

Based on the result of the virtual interface discovery the mobile access gateway decides whether the mobile node is to utilize a network-based mobility function for communication in the first access network and - based on the decision - the mobile access gateway initiates a second address configuration procedure for causing the mobile terminal to configure its IP address for communication via the mobile node's interface to the first access network according to the first access network's IP address prefix or mobile node's home network prefix.

It may be further advantageous if the first address configuration procedure and the virtual interface discovery are preformed in parallel.

In one exemplary embodiment, the virtual interface discovery comprises the mobile access gateway in the access network transmitting a neighbor solicitation message to the mobile node. The neighbor solicitation message includes the mobile node's IP address according to the mobile node's home network prefix as the neighbor solicitation's target. Based on the response received to the neighbor solicitation message, the mobile access gateway can determine whether the mobile node utilizes a network-based mobility function.

In a variation of this embodiment, the mobile access gateway detects that the mobile node utilizes a network based mobility function based on the mobile node transmitting a neighbor advertisement via its interface to the first access network in response to the neighbor solicitation.

According to another embodiment, the first address configuration procedure comprises the mobile access gateway transmitting a router advertisement to the mobile node destining the router advertisement to a unicast link layer address of the mobile node. The router advertisement may for example comprise the IP address prefix of the first access network and the mobile node's home network prefix.

The router advertisement may cause the mobile node to auto-configure deprecated IP layer addresses or causes the mobile node to perform a stateful IP address configuration. For configuring deprecated addresses, the router advertisement may comprise a respective preferred lifetime field for the IP address prefix of the first access network and an mobile node's home network prefix, both preferred lifetime fields being set to zero, and further comprises a respective valid lifetime field for the IP address prefix of the first access network and the mobile node's home network prefix, both valid lifetime fields being set to a value larger than zero.

According to another embodiment, the second address configuration procedure comprises the mobile access gateway transmitting a router advertisement to the mobile node. This router advertisement is to cause the mobile node to either configure an IP address according to the IP address prefix of the first access network or the mobile node's home network prefix for communication via its interface to the first access network, depending on the result of the virtual interface discovery.

In case the mobile access gateway detects that the mobile node does not implement a network-based mobility function the router advertisement of the second address configuration procedure may cause the mobile node to configure an IP address according to the IP address prefix of the first access network. If the router advertisement of the second address configuration procedure is to cause the mobile node to configure an IP address according to the IP address prefix of the first access network, the router advertisement of the second address configuration procedure may for example comprise a preferred lifetime field and a valid lifetime field for the IP address prefix of the first access network both being set to value larger than zero, and a preferred lifetime field and a valid lifetime field for the mobile node's home network prefix both being set to zero.

If the mobile access gateway detects that the mobile node implements a network-based mobility function the router advertisement of the second address configuration procedure may cause the mobile node to configure an IP address according to the IP address prefix of the second access network (which is e.g. the mobile node's home network prefix in the PMIP domain). This may be for example realized by the router advertisement of the second address configuration procedure comprising a preferred lifetime field and a valid lifetime field for the IP address prefix of the first access network both being set to zero, and a preferred lifetime field and a valid lifetime field for the mobile node's home network prefix both being set to a values bigger than zero.

In case the mobile node is to configure an IP address according to the mobile node's home network prefix, the mobile node may configure the IP address previously configured for communication via its interface to the second access network for communication via the interface to the first access network.

In another embodiment, it is assumed that the mobile node implements a virtual interface below the IP layer for utilizing a network-based mobility function when multiple physical interfaces are available and allows configuring the same IP address on several physical interfaces of the mobile node.

In further embodiment, the mobile access gateway detects that the mobile node utilizes a network-based mobility function based the mobile node transmitting a neighbor advertisement in response to a neighbor solicitation received from the mobile access gateway indicating that the IP address having been configured for the mobile node's physical interface to the second access network prior to the handover is still configured on the mobile node's interface having received the neighbor solicitation.

Likewise, the mobile access gateway may detect that the mobile node does not utilize a network-based mobility function based on the mobile node sending an error message in response to a neighbor solicitation transmitted by the mobile access gateway during the virtual interface discovery, wherein the neighbor solicitation message includes the IP address according to the mobile node's home network prefix as the neighbor solicitation's target. The error message may for example include the neighbor solicitation message in its option field. Further, the error message may be implemented as an ICMP message.

According to another embodiment of the invention the router advertisement transmitted during the first address configuration procedure indicates to the mobile node to use stateful address configuration for configuring its IP address in the first access network. The mobile access gateway may intercept a DHCP solicitation message transmitted by the mobile node for requesting the assignment of a IP address for use in the first access network and modifies the content of the intercepted DHCP solicitation message depending on the detection of a network-based mobility function. Subsequently, the mobile access gateway forwards the modified DHCP solicitation message to a network node for assigning IP addresses (e.g. a DHCP server) to the mobile node's interface to the first access network.

If the mobile access gateway detects that the mobile node is utilizing of a network-based mobility scheme, the mobile access gateway may for example modify the intercepted DHCP solicitation message by including the mobile node's home network prefix to the intercepted DHCP solicitation message. If the mobile access gateway detects that the mobile terminal is not utilizing network-based mobility scheme, the mobile access gateway may for example modify the intercepted DHCP solicitation message by including the first access network's IP address prefix to the intercepted DHCP solicitation message.

In a variant of this embodiment the mobile node configures an IP address for its interface to the first access network according to an address indicated in a response message being received at the mobile terminal in response to its DHCP solicitation message.

In another embodiment of the invention the mobile access gateway is transmitting a neighbor solicitation message and a router advertisement in response to a successful authentication of the mobile node by an AAA server. In this exemplary embodiment the mobile access gateway may for example receive an authentication message from the AAA server indicating whether the mobile node has been authenticated by the AAA server.

A further embodiment of the invention relates to a mobile access gateway for causing a mobile node to configure an IP address upon the mobile node attaching to a first access network of a mobile communication system during a handover of the mobile terminal from another, second access network utilizing an access technology different to the access technology used in the first access network. The first and the second access network both belong to a network domain offering a network-based mobility function and providing a home network prefix for the mobile node for configuring an IP address valid in the whole network domain. The mobile access gateway comprises a communication unit for performing a virtual interface discovery between a mobile access gateway and the mobile node to facilitate the detection of whether the mobile node utilizes a network-based mobility function, and for performing a first address configuration procedure providing the mobile node with the IP address prefix of the first access network and the mobile node's home network prefix for enabling the mobile node to provisionally configure a respective IP address according to the first access network's IP address prefix and the mobile node's home network prefixfor communication via the interface to the first access network. Moreover, the mobile access gateway comprises a processing unit for deciding by the mobile access gateway whether the mobile node is to utilize a network-based mobility function for communication in the first access network based on the result of the virtual interface discovery. The communication means of the mobile access gateway further performs - based on the decision of the mobile access gateway - a second address configuration procedure for causing the mobile node to configure its IP address for communication via the mobile node's interface to the first access network according to the first access network's IP address prefix or the mobile node's home network prefix.

In another embodiment, the mobile access gateway transmits a neighbor solicitation message to the mobile node when performing the virtual interface discovery, wherein the neighbor solicitation message includes the mobile node's IP address that has been configured according to the mobile node's home network prefix before the handover as the neighbor solicitation's target and detects whether the mobile node utilizes a network-based mobility function based on the response received to the neighbor solicitation message.

In a variant of the embodiment, the mobile access gateway is adapted to detect that the mobile node utilizes a network based mobility function based on the mobile node transmitting a neighbor advertisement via its interface to the first access network in response to the neighbor solicitation.

According to another embodiment of the invention the mobile access gateway transmits a router advertisement to the mobile node when performing the first address configuration procedure wherein the mobile access gateway is adapted to destine the router advertisement to a unicast link layer address of the mobile node. Thereby, the router advertisement may cause the mobile node to auto-configure deprecated IP layer addresses or causes the mobile node to perform a stateful IP address configuration.

Another embodiment of the invention relates to an access gateway comprising means for performing the steps of the method for configuring an IP address of a mobile node upon the mobile node attaching to a first access network according to one of the various embodiments and variants thereof described herein.

A further embodiment relates to a mobile node comprising a communication unit for attaching to a first access network of a mobile communication system during a handover of the mobile terminal from another, second access network utilizing an access technology different to the access technology used in the first access network (as mentioned before, the first and second access network are both part of a network domain offering network-based mobility and provide a home network prefix for the mobile node for configuring an IP address valid in the network domain). The communication unit comprises a receiver for receiving as part of a virtual interface discovery a neighbor solicitation from a mobile access gateway in the first access network, wherein the neighbor solicitation message includes - as the neighbor solicitation's target - the mobile node's IP address that has been configured according to mobile node's home network prefix before the handover. Further, the communication unit comprises a transmitter for sending as part of a virtual interface discovery an error message to the mobile access gateway in response to the neighbor solicitation, if the mobile node does not utilize a network-based mobility function.

Another embodiment of the invention relates to a computer-readable medium storing instructions that, when executed by a processing unit of a mobile access gateway, cause the mobile access gateway to make a mobile node configure an IP address upon the mobile node attaching to a first access network of a mobile communication system during a handover of the mobile terminal from another, second access network utilizing an access technology different to the access technology used in the first access network.

The mobile node is caused to configure an IP address by performing a virtual interface discovery between a mobile access gateway and the mobile node to facilitate the detection of whether the mobile node utilizes a network-based mobility function, performing a first address configuration procedure providing the mobile node with the respective IP address prefixes of the first and second access network to enable the mobile node to provisionally configure a respective IP address according to the first access network's IP address prefix and the mobile node's home network prefix for communication via the interface to the first access network, deciding by the mobile access gateway whether the mobile node is to utilize a network-based mobility function for communication in the first access network based on the result of the virtual interface discovery, and performing based on the decision of the mobile access gateway a second address configuration procedure for causing the mobile terminal to configure its IP address for communication via the mobile node's interface to the first access network according to the first access network's IP address prefix or the mobile node's home network prefix.

The computer readable medium according to another embodiment of the invention stores instruction that, when executed by a processing unit of the mobile access gateway, cause the mobile access gateway to perform the steps of the method for configuring an IP address of a mobile node upon the mobile node attaching to a first access network according to one of the various embodiments and variants thereof described herein

Another embodiment of the invention relates to a computer-readable medium that is storing instructions that, when executed by a mobile node, cause the mobile node to attach to a first access network of a mobile communication system during a handover of the mobile terminal from another, second access network utilizing an access technology different to the access technology used in the first access network, receive as part of a virtual interface discovery a neighbor solicitation from a mobile access gateway in the first access network, wherein, as the neighbor solicitation's target, the neighbor solicitation message includes the IP address according to the mobile node's home network prefix, and to send - as part of a virtual interface discovery - an error message to the mobile access gateway in response to the neighbor solicitation, if the mobile node does not utilize a network-based mobility function.

In a variant of the embodiment the computer-readable medium further stores instructions that, when executed by the processing unit of the mobile node, cause the mobile node to include the neighbor solicitation message in an option field of the error message.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an exemplary signaling flow according to PMIPv6 upon a mobile node initially attaching to a an access network in a PMIPv6 domain,
- **Fig. 2**: shows and exemplary signaling flow according to PMIPv6 upon a mobile node performing an inter-MAG handover in a PMIPv6 domain,
- **Fig. 3**: shows the logical structure of a mobile node implementing MIP and having multiple interfaces for attaching to access networks utilizing different access technologies,
- **Fig. 4**: shows the logical structure of a mobile node implementing a virtual interface and having multiple interfaces for attaching to access networks utilizing different access technologies,

- **Fig. 5**: shows example for an inter-access technology handover within a PMIPv6 domain of a mobile node having multiple interfaces for attaching to access networks utilizing different access technologies and the possible application of PMIPv6 or MIPv6,
- **Fig. 6**: shows an exemplary signaling flow for performing a virtual interface discovery and a stateless IP address configuration for a mobile node performing an inter-access technology handover and implementing a virtual interface according to an embodiment of the invention,
- **Fig.7**: shows an exemplary signaling flow for performing a virtual interface discovery and a stateless IP address configuration for a mobile node performing an inter-access technology handover and not implementing a virtual interface according to an embodiment of the invention,
- **Fig.8**: shows an exemplary signaling flow for performing a virtual interface discovery and a stateless IP address configuration for a mobile node performing an inter-access technology handover and not implementing a virtual interface according to another embodiment of the invention, where the mobile node is transmitting a binding update for deprecated addresses,
- **Fig. 9**: shows an exemplary signaling flow for performing a virtual interface discovery and a stateful IP address configuration for a mobile node performing an inter-access technology handover and implementing a virtual interface according to an embodiment of the invention, and
- **Fig. 10**: shows an exemplary signaling flow for performing a virtual interface discovery and a stateful IP address configuration for a mobile node performing an inter-access technology handover and not implementing a virtual interface according to an embodiment of the invention,

### DETAILED DESCRIPTION OF THE INVENTION

Before discussing the aspects and different exemplary embodiments of the invention in further detail, a definition of several terms frequently used in this document is provided.

A mobile node is a physical entity within a communication network that is typically mobile in that it may attach to different access networks and even to different access network technologies when moving.

One node (such as a mobile node) may have several functional entities. A functional entity refers to a software or hardware module that implements and/or offers a predetermined set of functions to other functional entities of a node or the network. An example for such functional entity may be for example the mobility function(s) that can be utilized or offered by a node, which are typically implemented by so-called protocols (such as for example MIPv6 as discussed in the Technological Background section).

Nodes may have one or more interfaces that attach the node to a communication facility or medium over which nodes can communicate. Typically, the communication facility to which the mobile nodes attach is referred to as an access network. Similarly, a network entity may have a logical interface attaching the functional entity to a communication facility or medium over it may communicate with other functional entities or nodes.

An address of a node or functional entity is a global or site-local identifier of the node or functional entity being either of permanent or temporarily limited validity. Typically, in most of the embodiments described herein an address is a network layer address, i.e. is used for identification of nodes and network entities on the network layer of the OSI reference model (see for example the textbook "Computer Networks", by Andrew S. Tanenbaum, fourth edition, 2003, Prentice Hall PTR, chapter 1.4 incorporated herein by reference). The network layer or Layer 3 typically provides the functional and procedural means for transferring variable length packets from a source to a destination via one or more networks. One example of such network layer addresses are IP addresses as specified in IPv4 or IPv6. Typically a network layer address (or IP address in most cases) consists of an address prefix part and a host identifier part. The address prefix part identifies the sub-network where the node attaches and can be advertised by a router serving the sub-network. The host identifier part is typically an identifier of the node's interface.

In the examples of utilizing Proxy MIP for network-based mobility, the address refers to an IP address that is valid within a Proxy MIP domain. Accordingly, if the mobile node is handing over to another Proxy MIP domain, a new IP address (PMIP-HoA) would be configured in the new PMIP domain. As long as the mobile node is moving in the PMIP domain (irrespective of the access technology) the mobile node may utilize the same IP address PMIP-HoA.

Typically, an interface of a node is assigned one address. However, it would also be possible to assign multiple addresses to a single interface. Further, in case of a node comprising plural functional entities, one or more addresses may be associated to a logical interface of a respective functional entity. Some nodes may also implement a logical interface that manages the traffic flow between multiple physical interfaces and hides the actually used physical interface from the network layer. Such virtual interface is known as virtual interface. The virtual interface manages the flow scheduling between the physical interfaces as it is described later in Fig. 4. Only one IP address is assigned to the virtual interface and only this address is used as a source address when sending network layer packets independent of the physical interface being used.

Generally, each network is identified by at least one number e.g. a so-called prefix. This number allows for routing of packets to the nodes in the network. Furthermore, this number refers to a pool of identifiers that can be used by the nodes in the network. An address in a network is an identifier out of the pool of identifiers. For example in IPv6, the number of a network is the IPv6 prefix and the address in a network is the IPv6 address composed of the IPv6 prefix and an IPv6 host part. In different networks, for example in a home network and a foreign network different addresses are used.

In some embodiments of the invention the IPv6 protocol is used on the network layer. In this case the address is an identifier for a single (logical) interface of a node such that a packet sent to it from another lPv6 subnet is delivered via a lower-layer link to the (logical) interface identified by that address.

A mobile access gateway (MAG) is a function in a router that manages the mobility related signaling for a mobile node that is attached to its access link. It is responsible for giving the MN the impression that it is attached to the same access link although the MN moves between the access links of different mobile access gateways.

Router advertisements are used by routers to advertise their presence. Router advertisement messages may also contain Internet parameters such as the hop limit that hosts should use in outgoing packets and optionally, link parameters. This facilitates centralized administration of critical parameters that can be set on routers and automatically propagated to all attached nodes.

Router advertisements are transmitted by the router either periodically, or in response to a router solicitation message. Typically, router solicitations are transmitted by nodes in the network when they enable an interface to the particular network to ask the router to generate a router advertisement immediately rather than at their next scheduled time.

Router advertisements contain prefixes that are used for on-link determination and/or address configuration, a suggested hop limit value, etc. For example, routers can specify whether hosts should use stateful (e.g. by means of DHCPv6) and/or autonomous (stateless) address configuration flags associated with the prefixes may specify the intended uses of a particular prefix. Nodes may use the advertised on-link prefixes to build and maintain a list that is used in deciding when a packet's destination is on-link or beyond a router.

One of the parameters transmitted along with a prefix in a router advertisement is the valid lifetime (that is typically provided in the homonymous field of the router advertisement). The valid lifetime defines the time for which the prefix is valid on the subnet, i.e. the router serving the subnet will stop advertising this prefix and packets containing address based on this prefix will not be forwarded any longer. The valid lifetime of a prefix is equal to the valid lifetime of an address based on this prefix. If the valid lifetime in the prefix option of a router advertisement (RA) is bigger than 0 and stateless address auto-configuration is used, nodes are requested to configure an address based on this prefix. The address becomes valid as well and can be used by node for sending packets. If the valid lifetime is equal to 0, the addresses based on this prefix become invalid and the nodes on the subnet must not use these addresses any longer.

Another parameter transmitted along with a prefix in a router advertisement is the preferred lifetime (that is typically also provided in the homonymous field of the router advertisement): for an address this means the length of time that a valid address is preferred. A preferred address assigned to an interface is used by upper layer protocols unrestrictedly. If the preferred lifetime expires (i.e. becomes equal to 0), the address becomes deprecated. The use of a deprecated address assigned to an interface is discouraged, but not forbidden. A deprecated address should no longer be used as a source address in new sessions (e.g. no new UDP or TCP connections should be set up using this address), but packets sent from or to deprecated addresses are delivered as expected, which means that a deprecated address may be used as a source address in ongoing sessions. The preferred lifetime is advertised in the prefix option in the router advertisement. In other words the preferred lifetime of a prefix is equal to the preferred lifetime of an address based on this prefix.

Nodes may further accomplish address resolution by multicasting a so-called neighbor solicitation that asks the target node to return its link-layer address. Neighbor solicitation messages are usually multicast to the solicited-node multicast address of the target address. The target returns its link-layer address in a unicast neighbor advertisement message. A single request-response pair of packets is sufficient for both the initiator and the target to resolve each other's link-layer addresses; the initiator includes its link-layer address in the neighbor solicitation. The neighbor solicitation messages can also be used to determine if more than one hode has been assigned the same unicast address.

Neighbor unreachability detection refers to a procedure for detecting the failure of a neighbor or the failure of the forward path to the neighbor. Doing so requires positive confirmation that packets sent to a neighbor are actually reaching that neighbor and being processed properly by the network layer (e.g. IP layer). Neighbor unreachability detection uses confirmation from two sources. When possible, upper-layer protocols provide a positive confirmation that a connection is making "forward progress", that is, previously sent data is known, to have been delivered correctly (e.g. new acknowledgments were received recently). When positive confirmation is not forthcoming through such "hints", a node may send unicast neighbor solicitation(s) that solicit neighbor advertisement(s) as reachability confirmation from the target node.

In one exemplary embodiment of the invention, addresses are IPv6 addresses as specified in S. Deering and R. Hinden, "Internet Protocol, Version 6 (IPv6) Specification", RFC 2460, December 1998 (incorporated herein by reference and available at http://www.ietf.org). Accordingly, in this exemplary embodiment, router advertisements and solicitations, neighbor advertisements and solicitations, neighbor unreachability detection, etc. are defined as provided in T. Narten, E. Nordmark, W. Simpson, et.al., "Neighbor Discovery for IP Version 6 (IPv6)", RFC 2461, December 1998 and S. Thomson, T. Narten, "IPv6 Stateless Address Autoconfiguration", RFC 2462, December 1998 (both RFCs incorporated herein by reference and available at http://www.ietf.org).

A home network of a mobile node is typically identified by the location of the home agent at which the mobile node registers its care-of address(es) for a given home address of the mobile node. This term will be used in connection with client-based mobility functions such as MIPv6 or MlPv4.

The term home link will be used in connection with a network-based mobility function such as PMIPv6 or PMIPv4. The home link is the link on which the mobile node obtained its initial address configuration after it moved into a network domain in which the network-based mobility function is provided. For example in PMIP, the mobile node always realizes that it is attached to the home link whenever the mobile node moves between different mobile access gateways within the PMIP domain, where a respective home network prefix has been assigned to the mobile node and the mobile node configures its IP address based on this home network prefix for communication when attaching to one of the access networks belonging to the PMIP domain. This initial IP address configured in the network domain of a network-based mobility function will be denoted PMIP-HoA herein.

The home link is a link that conceptually follows the mobile node. The network will ensure the mobile node always sees this link with respect to the Layer-3 network configuration, on any access link that it attaches to the domain of the network-based mobility function. Hence, irrespective of the access technology, as long as the access network is belonging to the same PMIP domain, the mobile access gateway of the access network will advertise the home network prefix assigned during initial attachment of the mobile node to the PMIP domain so that the mobile node may (continue) use (of) the IP address PMIP-HoA on its interface to the access network.

The home network prefix (PMIP-HNP) is the on-link address prefix (e.g. the IPv6 prefix) that the mobile node always sees in the domain of the network-based mobility function (e.g. Proxy Mobile IPv6 domain). The home network prefix is topologically anchored at the mobile node's Local Mobility Anchor (LMA) within the network domain offering the network-based mobility service. The mobile node configures its interface with an address from this prefix. The home network prefix is not necessarily the topologically correct address prefix used in a particular access network being advertised by the mobile access gateway. If the access network does not support network-based mobility or the access network is aware that the mobile node does not implement virtual interface, the mobile access gateway will advertise an address prefix of the visited access network that is different from the home network prefix. In this case a mobile node will configure an address on its interface to the visited access network according to this address prefix of the visited access network.

A home address in the terminology of client-based mobility functions is an address assigned to a mobile node that used as the permanent address of the mobile node irrespective of its point of attachment. This address has the prefix of the mobile node's home network and is denoted MIP-HoA herein. A care-of address is an address associated with a mobile node while visiting a foreign network. The prefix of the care-of address is typically equal to the prefix of the visited network. A mobile node may have one or more care-of addresses simultaneously.

In a client-based mobility scheme, a home agent is typically denoting a router or a functional entity providing a routing function on a mobile node's home network with which the mobile node registers its current care-of address(es). While the mobile node is away from home (i.e. a mobile node's interface is not attached to the mobile node's home network), the home agent may provide mobility service to the mobile node e.g. by intercepting packets on the home network destined to the mobile node's home address, encapsulating them, and tunneling them to one of or a some of the mobile node's registered care-of address(es).

For network-based mobility schemes, such as Proxy MIP, the home agent function is typically implemented by the Local Mobility Anchor (which may be considered a logical network entity providing mobility related function and being commonly provided within a router as a physical entity) in the access network. The LMA is the topological anchor of the home network prefix that is assigned to the mobile node in the PMIP domain. The LMA handles the mobile node's reachability state which means the LMA has a lookup table (proxy binding cache entry - BCE) that links the mobile node's home network prefix with the current mobile node's location which is the mobile access gateway with which the mobile node is currently registered. A mobile access gateway MAG is handling mobility procedures on behalf of a mobile node and sends for example registration messages on behalf of the mobile node to the local mobility anchor in order to register the mobile's new location/address In essence, when comparing PMIP and MIP, the functions of the home agent in MIP are essentially implemented by the Local Mobility Anchor (LMA) in PMIP and the functions of the mobile node in MIP are essentially implemented by the mobile access gateway in PMIP.

In the home agent the association between a mobile node's home address (MIP-HoA) and care-of address is known as a "binding" for the mobile node. Similarly in the LMA the association between home network prefix or PMIP-HoA and MAG's address, where the mobile is attached to, is know as "proxy binding" (or proxy binding cache entry) for the mobile node.

Virtual interface discovery refers to a procedure which allows the mobile access gateway to detect, whether a mobile node is implementing a virtual interface.

Concerning the provision of a mobility function to a mobile node, virtual interfaces are typically used together with network-based mobility functions, i.e. function in which a node (such as the mobile access gateway) in the network is providing functions to ensure data delivery to the mobile node, as it allows the mobile node's network layer (Layer 3) to maintain the same address for communication while the mobile terminal is moving through the network domain in which the network-based mobility function is offered. This network domain may include several access networks that may utilize different access technologies, so that the mobile node may require several physical interfaces to attach to the different access networks. The node acting on behalf of the mobile node in the access network within the network domain offering the network-based mobility function may send the proxy binding updates (and may process the proxy binding acknowledgements) for the mobile node and is typically referred to as the mobile access gateway.

One example of a network-based mobility function that is also used in several embodiments of the invention is the Proxy-Mobile IPv6 (or Proxy MIPv6) protocol as specified in S. Gundavelli et al., "Proxy Mobile lPv6", draft-ietf-netlmm-proxymip6-01.txt, June 2007 (incorporated herein by reference and available at http://www.ietf.org). In this protocol, the Local Mobility Anchor (LMA) is the home agent for the mobile node in the Proxy Mobile IPv6 domain. It is the topological anchor point for the mobile node's home network prefix and is the entity that manages the mobile node's reachability state. It is important to understand that the local mobility anchor has the functional capabilities of a home agent as defined in Mobile IPv6 specification RFC3775 and with the additional required capabilities for supporting Proxy Mobile IPv6 protocol as defined in the Internet Draft. The Mobile Access Gateway (MAG) may be considered a function that manages the mobility related signaling for a mobile node that is attached to its access link. It is responsible for tracking the mobile node's attachment to the link and for signaling the mobile node's local mobility anchor.

In order to better distinguish the technical meaning of similar terms used in client-based mobility functions and network-based mobility functions such as MIP and PMIP, the abbreviations will be preceded by "MIP" or "PMIP" to identify whether the respective abbreviation refers to the term defined according to a client-based mobility function or network-based mobility function respectively. Hence, e.g. in the embodiments relating to the use of MIPv6 and/or PMIPv6, MIP-HoA denotes the MIPv6 home address i.e. the permanent address of the mobile node in its home network, while PMIP-HoA denotes the home address of the mobile node in the PMIP domain, i.e. the address that is to be used by the mobile node on all interfaces to access networks belonging to the same PMIP domain.

One main aspect of the invention is to provide a mechanism enabling the network to dynamically discover a mobile node's capabilities during the inter-access technology handover and to offer the proper mobility service avoiding packet losses and handover delay. In order to detect the mobility function(s) implemented at the mobile node it is recognized whether or not a virtual interface is implemented at a mobile node that attaches to its access network. The respective node in the access network, the mobile access gateway, responsible for detecting the mobile node's implemented mobility function(s) utilizes a virtual interface detection procedure for this purpose. The implementation of a virtual interface hints to the mobile access gateway that the mobile node is supporting a network-based mobility function, such as for example Proxy MlPv6.

The virtual interface detection may be performed in parallel to address configuration for the mobile node's interface to the new access network. In this first address configuration procedure the mobile access gateway may advertise both, the address prefix that has been used by the mobile node to configure an address on its interface to the access network from which it is handed over and the prefix of the mobile access gateway's access network. The address prefix that has been used by the mobile node to configure an address on its interface to the access network from which it is handed over is typically equivalent to the mobile node's home network prefix, if a network-based mobility scheme has been used in this previous access network which requires that the mobile node's IP address in the network domain is configured according to a given prefix. Thereby it is assumed that the mobile access gateway is capable of offering a network-based mobility function and the access network to which the mobile node has been attached prior to its handover and the current access network belong to the same network domain in which the network-based mobility function is provided.

The address configuration procedure allows the mobile node to immediately configure an address according to the two prefixes for use with the interface to the current access network of the mobile access gateway. As the mobility function of the mobile node may not be known to the mobile access gateway upon sending the router advertisement, it may be advantageous to have the mobile node configuring deprecated addresses on the interface to the mobile access gateway's access network This may be for example achieved by the router advertisement advertising the two prefixes with a preferred lifetime set to 0. The configuration of deprecated addresses allows the mobile node to continue sending/receiving data packets of ongoing sessions and to perform control signaling on the network, but only in case the mobile node implements supports for network-based mobility. In case the mobile node implements host-based mobility, the configuration of two addresses (one according to the mobile node's home network prefix and one according to the new prefix utilized in the new access network to which the mobile node is handing over) does not allow the mobile node to communicate through its interface to the new access network during the virtual interface discovery because the two addresses are typically different from the address having been configured on the old interface before the handover. In other words the mobile access gateway first temporarily supports both mobility schemes in the new access network upon the mobile node attaching.

Upon detecting the mobile node's mobility function(s) the network (i.e. the mobile access gateway) may then offer the correct mobility service (e.g. Proxy MIP or (Client) MIP) to the mobile node by performing a second address configuration procedure that is deconfiguring the address for the mobility function not used on the new access network and configuring a valid address for the supported (or selected) mobility function. Hence, if the mobile node implements a network-based mobility function, e.g. Proxy MIP, the mobile access gateway may cause the mobile node to utilize this function by sending another router advertisement to the mobile node in which the valid and preferred lifetime fields of the address prefix of new access network is set to zero, so as to de-configure the previously configured address according to this prefix, while the valid and preferred lifetime fields of the mobile node's home network prefix is set to a value larger than zero, so as to configure a valid (non-deprecated) address according to this prefix for further communication on the interface to the new access network.

Similarly, if the mobile node (only) implements a client-based mobility function, e.g. MIP, the mobile access gateway should cause the mobile node to utilize this function by sending another router advertisement to the mobile node in which the valid and preferred lifetime fields of the mobile node's home network prefix is set to zero, so as to de-configure the previously configured address according to this prefix, while the valid and preferred lifetime fields of the address prefix of the new access network is to a value larger than zero so as to configure a valid (non-deprecated) address according to this prefix for further communication on the interface to the new access network.

Usually, the network operator (by means of an appropriate configuration of the mobile access gateway) takes decision about the mobility function to offer to the mobile nodes (assuming that network-based and host-based mobility service is available in the network). However, according in some embodiments of the invention the mobile node may influence the network's decision on the mobility function to be utilized and thus enables a mobile node-centric decision on the selection of the mobility function.

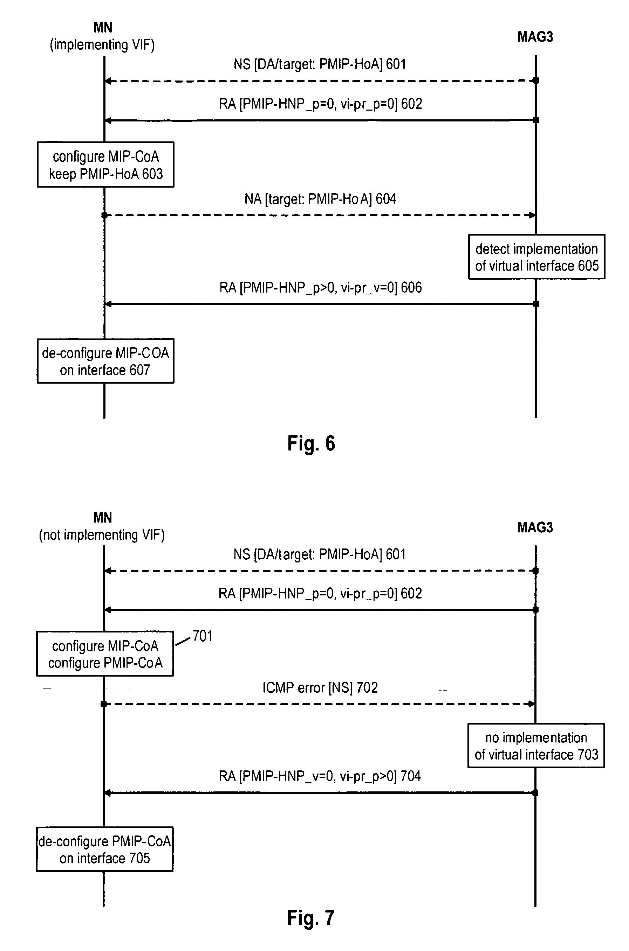

Fig. 6 and 7 show exemplary overviews on the signaling for virtual interface discovery and address configuration in an IPv6-based network according to exemplary embodiments of the invention. In Fig. 6 it is assumed that the mobile node MN has activated a virtual interface to the (access) network of the mobile access gateway MAG whereas in Fig. 7 it is assumed that no virtual interface is available. Further, it should be noted that for exemplary an inter-access technology handover in a system as shown in Fig. 5 is supposed in Fig. 6 to 10.

The arrows with dashed lines show the signaling procedure related to the virtual interface discovery, while the arrows with solid lines show the signaling procedure for address configuration.

First, Fig. 6 is considered in more detail, where it is assumed that a virtual interface is available and activated in mobile node MN. When implementing a virtual interface at the mobile node, it may be assumed that the mobile node keeps its address configured with the virtual interface activated when performing the handover to the new access network as shown in Fig. 4. Hence, also when attaching to the new access network the mobile node uses the address on interface IF1 to the previous access network of the network-based mobility domain is also configured on interface IF2 to the new access network. Therefore, the implementation of a virtual interface at the mobile node can be reduced to the detection of whether the previously configured IP address on the interface IF1 to the previous network-(from which the mobile node is handing over) is also configured on the interface IF2 to the new access network in which the mobile access gateway MAG3 is located.

For exemplary purposes it is assumed that the address configured with the virtual interface is the address (PMIP-HoA) according to the mobile node's home network prefix and that a network-based mobility function has been utilized in the old access network. Thus, the mobile access gateway MAG3 transmits 701 a neighbor solicitation NS for the mobile node's IP home address (as shown in Fig. 4) that is used by the mobile node's virtual interface on the socket to the upper layer protocol(s). In this example the IP home address is equivalent to the PMIP-HoA due to the use of a network-based mobility function being assumed in the old access network. Generally, the IP home address may also correspond to a topologically correct address of the mobile node configured according to the address prefix of the old access network if same is supported by the network-based mobility function.

Since the mobile node is assumed to implement a virtual interface, the IP home address PMIP-HoA is (also) configured on the mobile node's interface IF2 to the new access network and the mobile node responds 604 to the neighbor solicitation NS with a neighbor advertisement NA indicating that the IP home address PMIP-HoA is already in use on the new access network of the querying mobile access gateway MAG3. After receiving the neighbor advertisement NA, mobile access gateway MAG3 detects 605 (based on the mobile node answering to the neighbor solicitation by a neighbor advertisement) that the mobile node is implementing and using a virtual interface, so that the mobile access gateway MAG3 may assume the mobile node using a network-based mobility function (e.g. PMIP). Accordingly the mobile access gateway MAG3 may offer network-based mobility service to the mobile node by means of sending 606 another router advertisement as will be discussed below in more detail.

E.g. in parallel to virtual interface detection procedure, the mobile node is prepared for IP address configuration as well. For example also upon sending 601 the neighbor solicitation to the mobile node, the mobile access gateway MAG3 may further send 602 a router advertisement containing the mobile node's home network prefix PMIP-HNP and a visited prefix vi-pr. As explained before the home network prefix PMIP-HNP is referring to the address prefix of the network domain offering the network-based mobility function, while the visited prefix is the prefix topologically bound to mobile access gateway MAG 3 of the new access network.

As it may however be undesirable that the mobile node is utilizing simultaneously an address according to the home network prefix PMIP-HNP and an address according to the visited prefix vi-pr of the new access network. According to another embodiment of the invention, it is therefore proposed to cause the mobile node to configure deprecated addresses. The mobile node may continue transmitting data using the deprecated addresses for ongoing sessions (that e.g. have been already established prior to handover) and to utilize the addresses for control signaling in the new access network. The configuration of deprecated addresses may be caused by the mobile access gateway by including in the prefix option of the respective prefix a valid lifetime parameter set to a value larger than 0 and a preferred lifetime parameter equal to 0. In Fig. 6 (and also Fig. 7) "PMIP-HNP_p" denotes the home network prefix preferred lifetime, "vi-pr_p" denotes the visited prefix preferred lifetime, "PMIP-HNP_v" denotes the home network prefix valid lifetime and "vi-pr_v" denotes the visited prefix valid lifetime. As can be seen in Fig. 6 (and Fig. 7) the home network prefix preferred lifetime field in the respective prefix option for the home network prefix PMIP-HNP and visited prefix vi-pr are both set to zero so as to cause the mobile node configuring deprecated addresses from the prefixes. As it is assumed that the mobile node is utilizing network-based mobility and thus implements a virtual interface the mobile node has already configured 603 an IP address PMIP-HoA. MIP-CoA denotes the IP address that is generated 603 by the mobile node based on the visited prefix.

For exemplary purposes it is assumed that the router advertisement instructs the mobile node to utilize address auto-configuration for generating IP addresses from the two prefixes PMIP-HNP and vi-pr, so that the mobile node is capable of configuring 603 IP addresses according to both prefixes. As the mobile node is supposed to implement a virtual interface the IP address PMIP-HoA according to the home network prefix PMIP-HNP as utilized prior to handover is supposed to be still configured. Accordingly, the mobile node configures 603 this address on interface IF2 to the new access network, sets the address state to deprecated and continues to use the address PMIP-HoA only for ongoing sessions (but not for new sessions). Further, the mobile node configures a new IP address based on the visited prefix (MIP-CoA) on interface IF2 to the new access network also in deprecated state.

After the mobile access gateway MAG3 detects 605 that the mobile node is implementing a virtual interface, it may decide to offer network-based mobility to the mobile node. Therefore the mobile access gateway MAG3 generates and transmits 606 a new router advertisement RA which contains the home network prefix PMIP-HNP with valid and preferred lifetimes larger than 0 and visited prefix with valid and preferred lifetimes equal to 0. In this way the mobile node continues to use its previous IP address (PMIP-HoA) and abandons 607 the IP address based on the visited prefix (MIP-CoA). Furthermore, the mobile access gateway MAG3 must send a proxy binding update PBU to the LMA in order to register the mobile node's IP address (PMIP-HoA) configured on the new interface connected to the new access network.

Next, Fig. 7 is considered in more detail, where it is assumed that no virtual interface is available and activated in mobile node MN. Accordingly, the mobile node is utilizing a client-based mobility function so that the mobile node will configure a new care-of address when attaching to the new access network in which mobile access gateway MAG3 is located. For exemplary purposes it is also assumed in this example that the address configured on the interface (IF1) to the access technology before the handover is the address (PMIP-HoA) according to the mobile node's home network prefix and that a network-based mobility function has been utilized in the old access network, but this is not mandatory as explained above.

Similar to the situation in Fig. 3, since the virtual interface function is not used, the mobile node's IP address (PMIP-HoA) in interface IF1 to the previous network is not configured for interface IF2 through which the mobile node attaches to the new access network in which mobile access gateway MAG3 is located. Therefore the mobile node will discard the neighbor solicitation for the PMIP home address (PMIP-HoA) - i.e. the potential address it may have been using with the previous access technology if a network-based mobility function would have been offered by the network - that is received 601 from the mobile access gateway MAG3 and doesn't send a neighbor advertisement NA. As the MAG3 doesn't receive reply to the neighbor solicitation NS, it may consider the lack of a response (within a given time period) to indicate that the mobile node is not implementing a virtual interface and thus uses a client-based mobility function.

However, this consideration may not be an adequate mechanism for designing a failsafe virtual interface detection mechanism. Furthermore, if considering use of the Neighbor Unreachability Detection (NUD) as described in RFC 2461, no response to a neighbour solicitation NS is typically considered a loss of the neighbor solicitation NS and the mobile access gateway MAG3 should re-transmit the neighbor solicitation NS again. When sending multiple repetitions of the neighbor solicitation NS the resulting delay of approximately 3 sec until mobile access gateway MAG3 would decide that the solicited mobile node address is not used by a node in the network, i.e. the detection that the virtual interface is not available at the mobile node, introduces a significant overhead to the handover delay. To summarize, the exemplary use of the Neighbour Unreachability Detection (NUD) as described in RFC 2461 for the purpose of the virtual interface discovery would result in a very slow detection procedure.

Therefore, in another embodiment of the invention, it is suggested that in case the mobile node receives a unicast neighbor solicitation NS for the PMIP home address (PMIP-HoA) via its interface IF2 to the new access network, and the mobile node has not configured the solicited address on its interface IF2 to the new access network, the mobile node MN sends 702 an error message in response to the neighbor solicitation NS indicating that the solicited address is unreachable to the mobile access gateway MAG3. For example, the error message may be an ICMPv6 Error Message. In order to indicate that the error message is provided in response to the unicast neighbor solicitation NS sent 601 by the mobile access gateway MAG3, the mobile node may include a copy of the neighbor solicitation NS into an option field of the (ICMP) error message. The error message is destined to the sender of the neighbor solicitation NS, i.e. to mobile access gateway MAG3.

Upon reception of the error message, mobile access gateway MAG3 detects that the message is a response to the neighbor solicitation NS (based in the neighbor solicitation NS being included in the error message) and concludes 703 based on this response that the solicited PMIP home address PMIP-HoA of the mobile node is not configured on the mobile node's interface IF2, i.e. that no virtual interface is implemented in the mobile node.

Similar to the procedure illustrated in Fig. 6, mobile access gateway MAG3 may send 602 (e.g. in parallel to the neighbor solicitation NS) a router advertisement RA including home network prefix PMIP-HNP and visited prefix vi-pr with valid lifetimes bigger than 0 and preferred lifetimes equal to 0. Assuming that stateless address auto-configuration is used, at reception of the router advertisement RA the mobile node will configure 701 two new (IP) addresses - PMIP-CoA and MIP-CoA. The PMIP-CoA is an IP address based on the home network prefix PMIP-HNP but having different suffix compared to the address PMIP-HoA on the interface IF1 to the previous access network. The address PMIP-CoA is configured using the interface identifier of interface IF2 as suffix that is different from the one of interface IF1. MIP-CoA denote the IP address configured on the interface IF2 to the new access network in which mobile access gateway MAG3 is located based on the visited prefix vi-pr.

Both addresses PMIP-CoA and MIP-CoA may be configured in deprecated state because as described above. Though the home network prefix PMIP-HNP for the network-based mobility function is advertised on the new access network by mobile access gateway MAG3 in the unicast router advertisement RA, the mobile node is allowed to send a binding update, i.e. even if the home network prefix is present on the subnet. Furthermore, the mobile node should not send a binding update for deprecated addresses, which is the case for addresses PMIP-CoA and MIP-CoA. This is also shown in Fig. 7, where mobile node MN configures 701 the two addresses PMIP-CoA and MIP-CoA, but does not send binding update. The refresh of a binding by means of a binding update of the mobile node may only be allowed, if there are ongoing sessions sourced with the newly configured MIP-CoA, however situation is typically not occurring at handover.

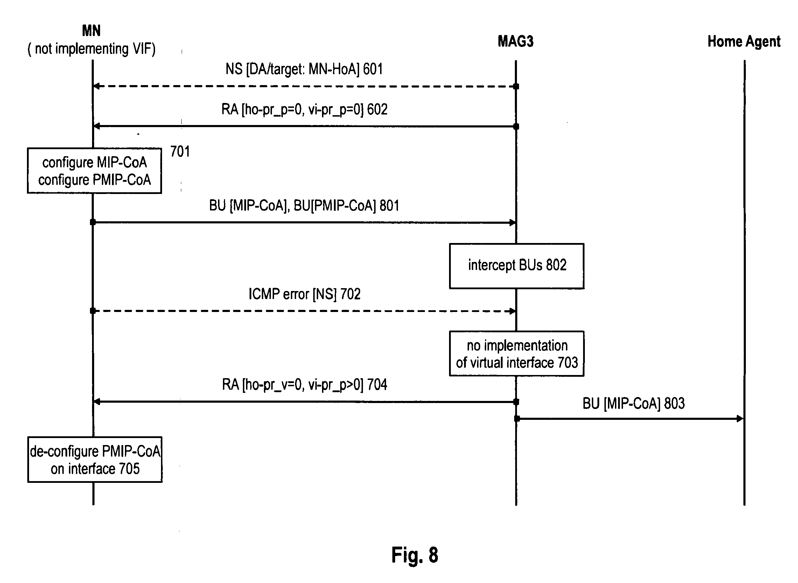

An optimization to the mobile node's behavior with respect to the update of its binding at the home agent when utilizing a client-based mobility function (as e.g. MlPv6), i.e. when not implementing a virtual interface is described next with respect to Fig. 8. Fig. 8 shows a signaling flow of the mobile node attaching to a new access network upon inter-technology handover according to another embodiment of the invention. Here, the mobile terminal is allowed to send binding updates for deprecated addresses. The signaling procedure shown in Fig. 8 is essentially similar to Fig. 7 as indicated by the alike reference numerals. As indicated above, mobile node MN is allowed to send 801 a binding update BU also for the deprecated addresses PMIP-CoA and MIP-CoA configured based on the router advertisement RA received from the mobile access gateway MAG3 in step 602. In order to reduce the signaling overhead that would be caused by a repeated update of the mobile node's binding, the mobile access gateway MAG3 may intercept 802 the binding update BU from the mobile node. As soon as mobile access gateway MAG3 detects that a virtual interface is not available on the interface IF2 to the new access network, mobile access gateway MAG3 will forward 803 the binding update BU for address MIP-CoA further to the home agent of mobile node MN and discards the binding update for the address PMIP-CoA. This behavior of early sending of binding update by the mobile node for deprecated addresses may reduce the handover delay compared to the case where the mobile access gateway would have advertised only the home network prefix PMIP-HNP in the first address configuration procedure.

After mobile access gateway MAG3 receiving 702 the ICMP error message and detecting 703 that no virtual interface is available at the mobile node, mobile access gateway MAG3 sends 704 another router advertisement RA which contains the home network prefix PMIP-HNP with valid and preferred lifetimes equal to 0 and visited prefix vi-pr with valid and preferred lifetimes bigger than 0. The reception of the router advertisement RA at mobile node MN results in changed status for address MIP-CoA from deprecated to preferred, thus the mobile node MN sends a binding update BU (not shown) to its home agent HA for registering the newly configured address MIP-CoA. Note that the binding update is sent only if the optimization described in the previous paragraph is not implemented, i.e. the mobile node is allowed to send binding update for deprecated addresses. Further, mobile node MN changes 705 the status of the address PMIP-CoA configured according to the home network prefix PMIP-HNP to invalid and abandons this IP address.

As described previously, the advantage of advertising both prefixes (home network prefix and visited prefix) is that in case the virtual interface is implemented at the mobile node, the mobile node can continue sending/receiving data packets during the virtual interface discovery procedure, and therefore, the handover delay and packets loss can be minimized. In case that no virtual interface is implemented at the mobile node and a client-based mobility function (e.g. MIP) manages the inter-technology handover, the mobile node can start to configure a topologically correct address MIP-CoA already during virtual interface discovery procedure, i.e. the mobile node may for example start perform a duplicate address detection after the first router advertisement RA is received. This is especially advantageous in case that optimistic duplicate address detection is not implemented in the mobile node. The mobile node may performs duplicate address detection during virtual interface discovery ongoing and after receiving the second router advertisement RA so that less time is needed to complete the duplicate address detection and to transmit the binding update to the mobile node's home agent for registration of the new care-of address MIP-CoA.

Fig. 8 shows an exemplary signaling flow for performing a virtual interface discovery and a stateless IP address configuration for a mobile node performing an inter-access technology handover and not implementing a virtual interface according to another embodiment of the invention, where the mobile node is transmitting a binding update for deprecated addresses. As no virtual interface is implemented in the mobile node in this example, the client-based mobility function, here MIP takes care about the inter-technology handover. The MIP implementation according to this exemplary embodiment allows the mobile node to send binding updates for care-of addresses that are in deprecated state, given that there are no other care-of addresses in preferred state and if the mobile node's MIP home address MIP-HoA is not configured on the interface to the new access network. This may assure service continuity to sessions started before the handover. As shown in Fig. 8, upon mobile node MN having received 601, 602 the neighbor solicitation NS and the router advertisement RA from mobile access gateway MAG3 as described previously herein, mobile node MN configures 701 care-of addresses PMIP-CoA and MIP-CoA in deprecated state for use on its interface IF2 to the new access network of mobile access gateway MAG3 based on the home network prefix PMIP-HNP and the visited prefix vi-pr and sends 801 binding updates for both care-of addresses PMIP-CoA and MIP-CoA. It is assumed that mobile node MN applies an optimistic duplicate address detection (DAD) procedure so that the use of IP addresses is allowed before the DAD procedure is completed.

Mobile access gateway MAG3 intercepts 802 the binding updates sent by mobile node MN until the virtual interface discovery procedure is completed. Actually, when mobile access gateway MAG3 receives a binding update from mobile node MN this means that mobile node MN implements a client-based mobility scheme and mobile access gateway MAG3 may utilize the detected scheme by causing mobile node MN to de-configure the care-of address PMIP-CoA that has been configured according to the home network prefix PMIP-HNP of the network domain offering the network-based mobility function.

However mobile access gateway MAG3 is still unsure, if mobile node MN does also implement a virtual interface and also supports network-based mobility or not. Therefore, mobile access gateway MAG3 may delay the binding updates until virtual interface discovery is completed. If utilizing MIPv6 as specified in RFC 3755, once mobile node MN doesn't receive a binding acknowledgment from the MIP home agent within a given time period (called MAX_BINDACK_TIMEOUT and having default value of 32 seconds), mobile node MN should retransmit the binding update to the MIP home agent. As it may be assumed that the virtual interface discovery procedure is performed within a few tens of milliseconds, the delay of the binding updates caused by the interception of mobile access gateway MAG shouldn't have impact on the care-of address registration process with the MIP home agent.

If mobile access gateway MAG3 detects that a virtual interface is implemented at mobile node MN, and given mobile access gateway MAG3 decides to utilize network-based mobility, mobile access gateway MAG3 discards both binding updates, as the PMIP-HoA of the mobile node within the domain of the network-based mobility function is unchanged even though the handover is performed (e.g. in case of PMIPv6 it may be assumed that the mobile access gateway to which the mobile node first attached has already registered the IP address the mobile node is to use in the PMIPv6 domain at the LMA previously).

If mobile access gateway MAG3 detects that no virtual interface is implemented, mobile access gateway MAG3 only forwards 803 the binding update for care-of address MIP-CoA because the address based on home network prefix, PMIP-CoA, can be abandoned The binding update for the care-of address PMIP-CoA is discarded by the mobile access gateway MAG3. As explained in connection with Fig. 7, mobile access gateway MAg3 may furterh transmit 704 a router advertisement RA to de-configure 705 the care-of address PMIP-CoA.

As indicated previously, there may be also mobile nodes that support not only one mobility function but several mobility functions. Hence, it is possible that a mobile node is not only capable of using a network-based mobility function but also a client-based mobility function. In case the mobile node implement a virtual interface it may be assumed that the virtual interface hides the inter-technology handover from higher layer protocols such as MIP so that in essence the situation will be similar to same described with respect to Fig. 6, because the MIP implementation would not realize inter-technology handover.

However, whether or not the client-based mobility function realizes a inter-access technology handover if a virtual interface/network-based mobility function is available at the mobile node will dependent from the IP protocol stack implementation in the mobile node. If assuming a "sophisticated" mobile node that is aware about the implementation of a virtual interface/PMIP and MIP, the mobile node may influence the mobility mode offered by the access network. For example, the mobile node can decide whether to send a neighbor advertisement NA (see Fig. 6) or an ICMP error message (see Fig. 7) in response to the neighbor solicitation NS for the IP address PMIP-HoA sent by the mobile access gateway for identifying the implementation of a virtual interface and thereby the mobile node may influence the mobile access gateway's decision which mobility function to use. In other words, the mobile node may on purpose "cheat" the mobile access gateway on its virtual interface implementation.

This operation of the mobile node has the advantage that the mobile node is able to indirectly choose the mobility service that will be offered by the network. For example, the mobile node may choose to use PMIP because PMIP is preferred mobility service, since packet overhead and signaling over the air are reduced. Alternatively, the mobile node may choose to use (Client) MIP in case flow scheduling between two physical interfaces is needed, as it is for example the case Mobile Nodes and Multiple Interfaces MONAMI. Another reason to prefer (Client) MIP may be that the mobile node would like to perform MIP route optimization with its corresponding node, which is currently only possible only when (Client) MIP is used as the mobility function.

In case no mobility management function (neither network-based mobility nor client-based mobility) is supported by the mobile node session continuity during inter-technology handover cannot be supported.

In most of the embodiments of the invention described so far a stateless autoconfiguration of the mobile node's IP address has been assumed. However, the invention may also be used together with stateful address autoconfiguration (e.g. Dynamic Host Configuration Protocol - DHCP).

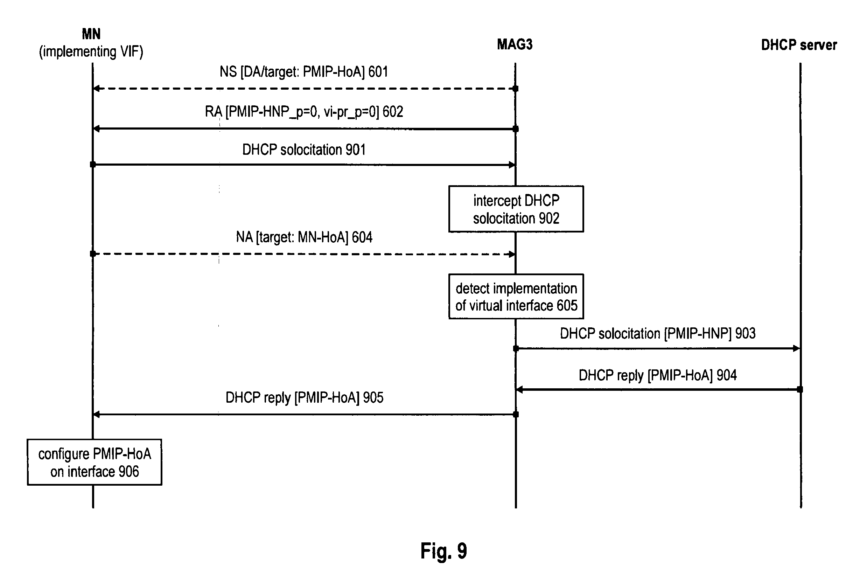

Fig. 9 shows an exemplary signaling flow for performing a virtual interface discovery and a stateful IP address configuration for a mobile node performing an inter-access technology handover and implementing a virtual interface according to an embodiment of the invention. Essentially the signaling flow is similar to that shown in Fig. 6. In contrast to Fig. 6, the "M" flag in the first router advertisement RA sent 901 by mobile access gateway MAG3 indicates to mobile node MN that its should perform a stateful address configuration. Accordingly, mobile node MN sends 902 a DHCP solicitation message which is intercepted 903 by mobile access gateway MAG3 acting as DHCP relay agent. Similar to the situation in Fig. 8 with respect to the delay of the binding updates, mobile access gateway MAG3 delays the DHCP solicitation (or request) message until the virtual interface discovery is completed.

If mobile node MN implements a virtual interface the delay of the DHCP solicitation at mobile access gateway MAG3 is advantageous, as otherwise the mobile node MN may be configured by the DHCP server with care-of address according to the IP address prefix of the new access network, although this address is not needed as mobile access gateway MAG3 may select network-based mobility for mobile node MN. Therefore, after mobile access gateway MAG3 detects 605 that mobile node MN implements a virtual interface, it modifies the DHCP solicitation message to the DHCP server so that same includes home network prefix PMIP-HNP and then forwards 904 the modified DHCP solicitation message to the DHCP server. The DHCP server identifies the home network prefix PMIP-HNP and assigns mobile node MN the IP address PMIP-HoA, i.e. the address the mobile node is supposed to utilize in the PMIP domain. Accordingly, the address in the DHCP reply (or analogically advertise) message includes the PMIP home address PMIP-HoA of the mobile node. the DHCP reply is forwarded 905, 906 to mobile node MN via mobile access gateway MAG3 . Upon receiving the DHCP reply at mobile node MN, mobile node MN configures 907 the address PMIP-HoA in the DHCP reply on its interface IF2 to the new access network.

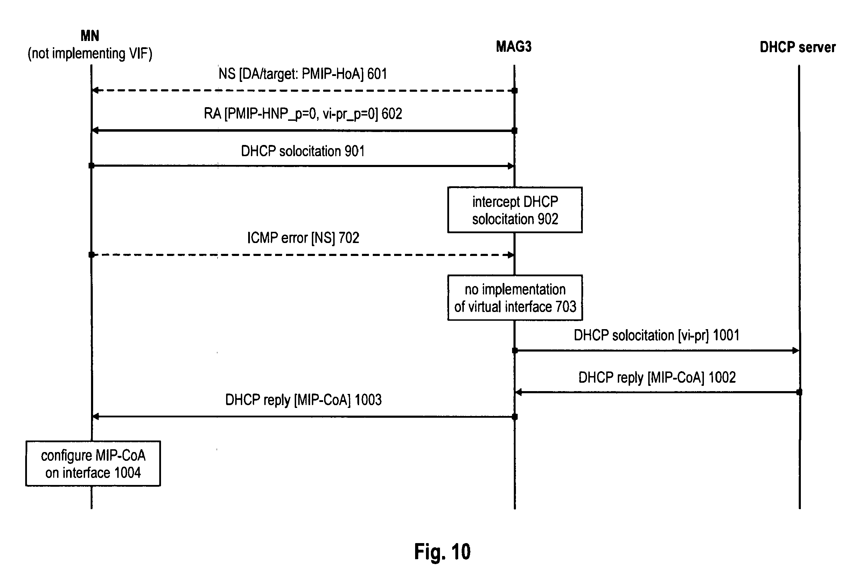

Fig. 10 shows an exemplary signaling flow for performing a virtual interface discovery and a stateful IP address configuration for a mobile node performing an inter-access technology handover and not implementing a virtual interface according to an embodiment of the invention. Essentially, the procedure is similar to the one shown in Fig. 9. However, in contrast to Fig. 9, it is assumed that mobile node MN does not implement a virtual interface. Upon detecting 703 at mobile access gateway MAG3 that no virtual interface is provided, mobile access gateway MAG3 modifies the intercepted DHCP solicitation of mobile node MN so as to request the DHCP server for an IP address according to the visited prefix. Accordingly, mobile access gateway MAG3 includes the visited prefix vi-pr to the DHCP solicitation and sends 1001 the modified DHCP solicitation to the DHCP server. The DHCP server identifies the visited prefix vi-prand assigns mobile node MN the IP address MIP-CoA as a care-of address. The address in the DHCP reply message includes the care-of address MIP-CoA for the mobile node and the DHCP reply is forwarded 1002, 1003 to mobile node MN via mobile access gateway MAG3 . Upon receiving the DHCP reply at mobile node MN, mobile node MN configures 1004 the address MIP-CoA in the DHCP reply on its interface IF2 to the new access network and may send a binding update for the new care-of address to its MIP home agent in the home network.

In the embodiments relating to the transmission of binding updates utilizing MIP as a client-based mobility function propose changes to the behavior of the MIP implementation is with respect to whether and when to send binding updates by the mobile node. Another alternative solution according to another embodiment of the invention is to modify the mobile node's functionality, if a virtual interface is available. The mobile node is configured in such way that it doesn't configure new care-of address(es) when it receives a prefix having preferred lifetime equal to 0 and the prefix being different from the home network prefix, as long as the home network prefix is advertised in the access network the mobile node attaches. Considering the example in Fig.6, this means that after receiving 602 the router advertisement RA from the mobile access gateway MAG3 mobile node MN keeps using the PMIP-HoA in deprecated state and doesn't configure a new MIP-CoA in step 603. This would reduce the number of IP address configuration steps performed by mobile node MN, e.g. mobile node MN would not perform DAD for the address MIP-CoA. Of course if the second advertised prefix is different from the home network prefix PMIP-HNP, but the preferred lifetime is bigger than 0, mobile node MN shall configure a new IP address as usual. This would be conform with the site-renumbering procedure, when the network initiates a change of the IP prefix for on the subnet.

In most embodiments of the invention described herein Proxy MIPv6 as protocol for network-based mobility management is assumed, but the invention is not limited to Proxy MIPv6. It may also be applicable to other network-based mobility management protocols, such as Proxy MIPv4. Similarly, the invention is also not limited to the use of (Client) MIPv6 as a client-based mobility scheme.

As has been becoming apparent, the mobile access gateway may require some additional functions not provided in the Proxy MIP specification by S. Gundavelli et al., "Proxy Mobile IPv6". The mobile access gateway may be for example provided with means to learn mobile node's PMIP-HoA additionally to the mobile node's home network prefix for PMIP and optionally other parameters). The PMIP-HoA of the mobile node may be for example obtained in a way similar to HNP retrieval by the mobile access gateway as described in the Technical Background section with respect to Fig. 2.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for configuring an IP address of a mobile node upon the mobile node attaching to a first access network of a mobile communication system during a handover of the mobile terminal from another, second access network utilizing an access technology different to the access technology used in the first access network, wherein the first and the second access network belong to a network domain offering a network-based mobility function and providing a home network prefix for the mobile node for configuring an IP address valid in the network domain, the method comprising the steps of:
performing a virtual interface discovery between a mobile access gateway and the mobile node to facilitate the detection of whether the mobile node utilizes the network-based mobility function,
performing a first address configuration procedure providing the mobile node with the IP address prefixes of the first access network and the mobile node's home network prefix to enable the mobile node to provisionally configure a respective IP address according to a respective one of the IP address prefixes for communication via the interface to the first access network,
deciding by the mobile access gateway whether the mobile node is to utilize a network-based mobility function for communication in the first access network based on the result of the virtual interface discovery, and
performing based on the decision of the mobile access gateway a second address configuration procedure for causing the mobile terminal to utilize an IP address for communication via the mobile node's interface to the first access network according to the IP address prefix of the first access network or the mobile node's home network prefix.

2. The method according to claim 1, wherein the virtual interface discovery comprises transmitting by a mobile access gateway in the access network a neighbor solicitation message to the mobile node, wherein the neighbor solicitation message includes the mobile node's IP address according to the home network prefix as the neighbor solicitation's target and
wherein the method comprises the step of detecting by the mobile access gateway whether the mobile node utilizes a network-based mobility function based on the response received to the neighbor solicitation message.

3. The method according to claim 2, wherein the mobile access gateway detects that the mobile node utilizes a network based mobility function based on the mobile node transmitting a neighbor advertisement via its interface to the first access network in response to the neighbor solicitation.

4. The method according to one of claims 1 to 3, wherein the first address configuration procedure comprises the mobile access gateway transmitting a router advertisement to the mobile node destining the router advertisement to a unicast link layer address of the mobile node.

5. The method according to claim 4, wherein the router advertisement causes the mobile node to auto-configure deprecated IP layer addresses or causes the mobile node to perform a stateful IP address configuration.

6. The method according to one of claims 4 or 5, wherein the router advertisement comprises the IP address prefix of the first access network and the mobile node's home network prefix.

7. The method according to claim 6, wherein the router advertisement comprises a respective preferred lifetime field for the IP address prefix of the first access network and the mobile node's home network prefix , both preferred lifetime fields being set to zero, and further comprises a respective valid lifetime field for the IP address prefix of the first access network and the mobile node's home network prefix, both valid lifetime fields being set to a value larger than zero.

8. The method according to one of claims 1 to 7, wherein the second address configuration procedure comprises the mobile access gateway transmitting a router advertisement to the mobile node, wherein said router advertisement is to cause the mobile node to configure an IP address either according to the IP address prefix of the first access network or the mobile node's home network prefix for communication via its interface to the first access network, depending on the result of the virtual interface discovery.

9. The method according to claim 8, wherein in case the mobile access gateway detects that the mobile node does not implement a network-based mobility function the router advertisement of the second address configuration procedure causes the mobile node to configure an IP address according to the IP address prefix of the first access network.

10. The method according to claim 8 or 9, wherein in case the router advertisement of the second address configuration procedure is to cause the mobile node to configure an IP address according to the IP address prefix of the first access network, the router advertisement of the second address configuration procedure comprises a preferred lifetime field and a valid lifetime field for the IP address prefix of the first access network both being set to value bigger than zero, and a preferred lifetime field and a valid lifetime field for the mobile node's home network prefix both being set to zero.

11. The method according to one of claims 8 to 10, wherein in case the mobile access gateway detects that the mobile node implements a network-based mobility function the router advertisement of the second address configuration procedure causes the mobile node to configure an IP address according to the mobile node's home network prefix.

12. The method according to one of claims 8 to 11, wherein in case the router advertisement of the second address configuration procedure is to cause the mobile node to configure an IP address according to the mobile node's home network prefix, the router advertisement of the second address configuration procedure comprises a preferred lifetime field and a valid lifetime field for the IP address prefix of the first access network both being set to zero, and a preferred lifetime field and a valid lifetime field for the mobile node's home network prefix both being set to a value bigger than zero.

13. The method according to claim 12, wherein the mobile node is configuring the IP address according to the mobile node's home network prefix for communication via the interface to the first access network.

14. The method according to one of claims 1 to 13, wherein the first address configuration procedure and the virtual interface discovery are preformed in parallel.

15. The method according to one of claims 1 to 14, wherein the mobile node implements a virtual interface below the IP layer for utilizing a network-based mobility function when multiple physical interfaces are available and allows to configure the same IP address on several physical interfaces of the mobile node to access networks belonging to the network domain offering the network-based mobility function.

16. The method according to one of claims 1 to 15, wherein the mobile access gateway detects that the mobile node utilizes a network-based mobility function based the mobile node transmitting a neighbor advertisement in response to a neighbor solicitation received from the mobile access gateway indicating that the IP address having been configured for the mobile node's physical interface to the second access network prior to the handover is still configured on the mobile node's interface having received the neighbor solicitation.

17. The method according to one of claims 1 to 16, wherein the mobile access gateway detects that the mobile node does not utilize a network-based mobility function based on the mobile node sending an error message in response to a neighbor solicitation transmitted by the mobile access gateway during the virtual interface discovery to the mobile node, wherein the neighbor solicitation message includes the mobile node's IP address according to the mobile node's home network prefix as the neighbor solicitation's target.

18. The method according to claim 16, wherein the error message includes the neighbor solicitation message in its option field.

19. The method according to claim 16 or 17, wherein the error message is an ICMP error message.

20. The method according to one of claims 1 to 19, wherein the router advertisement transmitted during the first address configuration procedure indicates to the mobile node to use stateful address configuration for configuring its IP address in the first access network, and wherein the method further comprises the steps of:
intercepting by the mobile access gateway a solicitation message transmitted by the mobile node for requesting the assignment of a IP address for use in the first access network,
modifying the content of the intercepted solicitation message at the mobile access gateway depending on the detection of a network-based mobility function, and
forwarding the modified solicitation message to a network node for assigning IP addresses to the mobile node's interface to the first access network.

21. The method according to claim 20, wherein in case the mobile access gateway detects that the mobile node is utilizing of a network-based mobility scheme, the mobile access gateway modifies the intercepted solicitation message by including the mobile node's home network prefix to the intercepted solicitation message.

22. The method according to claim 20 or 21, wherein in case the mobile access gateway detects that the mobile terminal is not utilizing network-based mobility scheme, the mobile access gateway modifies the intercepted solicitation message by including the first access network's IP address prefix to the intercepted solicitation message.

23. The method according to one of claims 20 to 22, further comprising the step of configuring at the mobile node an IP address for the mobile node's interface to the first access network that is indicated in a response message being received at the mobile terminal in response to its solicitation message.

24. The method according to one of claims 1 to 24, wherein the mobile access gateway is transmitting a neighbor solicitation message and a router advertisement in response to a successful authentication of the mobile node by an AAA server.

25. The method according to claim 24, further comprising the step of receiving at the mobile access gateway an authentication message from the AAA server indicating whether the mobile node has been authenticated by the AAA server.

26. A mobile access gateway for causing a mobile node to configure an IP address upon the mobile node attaching to a first access network of a mobile communication system during a handover of the mobile terminal from another, second access network utilizing an access technology different to the access technology used in the first access network, wherein the first and the second access network belong to a network domain offering a network-based mobility function and providing a home network prefix for the mobile node for configuring an IP address valid in the network domain, the mobile access gateway comprising:
a communication unit for performing a virtual interface discovery between a mobile access gateway and the mobile node to facilitate the detection of whether the mobile node utilizes a network-based mobility function,
wherein the communication unit is adapted to perform a first address configuration procedure providing the mobile node with the IP address prefix of the first access network and the mobile node's home network prefix to enable the mobile node to provisionally configure a respective IP address according to the first access network's IP address prefix and the mobile node's home network prefix for communication via the interface to the first access network, and
a processing unit for deciding by the mobile access gateway whether the mobile node is to utilize a network-based mobility function for communication in the first access network based on the result of the virtual interface discovery,
wherein the communication means is adapted to perform based on the decision of the mobile access gateway a second address configuration procedure for causing the mobile terminal to configure its IP address for communication via the mobile node's interface to the first access network according to the first access network's IP address prefix or the mobile node's home network prefix.

27. The mobile access gateway according to claim 26, wherein the mobile access gateway is adapted to transmit a neighbor solicitation message to the mobile node when performing the virtual interface discovery, wherein the neighbor solicitation message includes the mobile node's IP address according to the mobile node's home network prefix as the neighbor solicitation's target and
the mobile access gateway is further adapted to detect whether the mobile node utilizes a network-based mobility function based on the response received to the neighbor solicitation message.

28. The mobile access gateway according to claim 27, wherein the mobile access gateway is adapted to detect that the mobile node utilizes a network based mobility function based on the mobile node transmitting a neighbor advertisement via its interface to the first access network in response to the neighbor solicitation.

29. The mobile access gateway according to one of claims 26 to 28, wherein the mobile access gateway is adapted to transmit a router advertisement to the mobile node when performing the first address configuration procedure wherein the mobile access gateway is adapted to destine the router advertisement to a unicast link layer address of the mobile node.

30. The mobile access gateway according to claim 29, wherein the router advertisement causes the mobile node to auto-configure deprecated IP layer addresses or causes the mobile node to perform a stateful IP address configuration.

31. The mobile access gateway according to one of claims 26 to 30, wherein the mobile access gateway further comprises means for performing the steps of the method according to one of claims 5 to 25.

32. A mobile node comprising:
a communication unit for attaching to a first access network of a mobile communication system during a handover of the mobile terminal from another, second access network utilizing an access technology different to the access technology used in the first access network, wherein the first and
the second access network belong to a network domain offering a network-based mobility function and providing a home network prefix for the mobile node for configuring an IP address valid in the network domain,
wherein the communication unit comprises a receiver for receiving as part of a virtual interface discovery a neighbor solicitation from a mobile access gateway in the first access network, wherein the neighbor solicitation message includes the IP address according to the mobile node's home network prefix as the neighbor solicitation's target, and
wherein the communication unit further comprises a transmitter for sending as part of a virtual interface discovery an error message to the mobile access gateway in response to the neighbor solicitation, if the mobile node does not utilize the network-based mobility function.

33. The mobile node according to claim 32, wherein the error message includes the neighbor solicitation message in its option field.

34. The mobile node according to claim 32 or 33, wherein the error message is an ICMP error message.

35. A computer-readable medium storing instructions that, when executed by a processing unit of a mobile access gateway, cause the mobile access gateway to make a mobile node configure an IP address upon the mobile node attaching to a first access network of a mobile communication system during a handover of the mobile terminal from another, second access network utilizing an access technology different to the access technology used in the first access network, wherein the first and the second access network belong to a network domain offering a network-based mobility function and providing a home network prefix for the mobile node for configuring an IP address valid in the network domain, by:
performing a virtual interface discovery between a mobile access gateway and the mobile node to facilitate the detection of whether the mobile node utilizes a network-based mobility function,
performing a first address configuration procedure providing the mobile node with the IP address prefixes of the first access network and the mobile node's home network prefix for enabling the mobile node to provisionally configure a respective IP address according to the first access network's IP address prefix and the mobile node's home network prefix for communication via the interface to the first access network,
deciding by the mobile access gateway whether the mobile node is to utilize a network-based mobility function for communication in the first access network based on the result of the virtual interface discovery, and
performing based on the decision of the mobile access gateway a second address configuration procedure for causing the mobile terminal to configure its IP address for communication via the mobile node's interface to the first access network according to the first access network's IP address prefix or the mobile node's home network prefix.

36. The computer readable medium according to claim 35, further storing instruction that, when executed by the processing unit of the mobile access gateway, cause the mobile access gateway to perform the steps of the method according to one of claims 2 to 25.

37. A computer-readable medium storing instructions that, when executed by a mobile node, cause the mobile node to perform the steps of:
attaching to a first access network of a mobile communication system during a handover of the mobile terminal from another, second access network utilizing an access technology different to the access technology used in the first access network, wherein the first and the second access network belong to a network domain offering the network-based mobility function and providing a home network prefix for the mobile node for configuring an IP address valid in the network domain,
receiving as part of a virtual interface discovery a neighbor solicitation from a mobile access gateway in the first access network, wherein the neighbor solicitation message includes the IP address according to the mobile node's home network prefix as the neighbor solicitation's target, and
sending as part of a virtual interface discovery an error message to the mobile access gateway in response to the neighbor solicitation, if the mobile node does not utilize a network-based mobility function.

38. The computer-readable medium according to claim 37 further storing instructions that, when executed by the processing unit of the mobile node, cause the mobile node to include the neighbor solicitation message in an option field of the error message.

39. The computer-readable medium according to claim 37, wherein the error message is an ICMP error message.
